# EUROPEAN PATENT APPLICATION

(11) **EP 0 590 373 A1**
(43) Date of publication of application: **06.04.1994**
(21) Application number: 93114448.9
(22) Date of filing: 08.09.1993
(51) Int. Cl.: H01L 41/09

(54) **Ultrasonic motor**

(30) Priority: 29.09.1992 JP 259295/92; 29.09.1992 JP 259296/92
(71) Applicant: MURATA MANUFACTURING CO., LTD., Nagaokakyo-shi, Kyoto 617 (JP)
(72) Inventor: Fujishima, Satoru, c/o Murata Manuf. Co., Ltd., Nagaokakyo-shi, Kyoto 617 (JP)
(74) Representative: Schoppe, Fritz, Dipl.-Ing.

(57) **Abstract**

An ultrasonic motor having Langevin vibrators. The ultrasonic motor has a structure where a rotor is disposed between mutually facing Langevin vibrators. The Langevin vibrators are impressed with an alternating voltage, and thickness vibration of the Langevin vibrators are excited. Further, the thickness vibration of the Langevin vibrators causes traveling flexural vibration of the rotor.

## Description

### [Technical Field]

The present invention relates to an ultrasonic motor used as a driving device of a machine like a bicycle or a car.

### [Background Art]

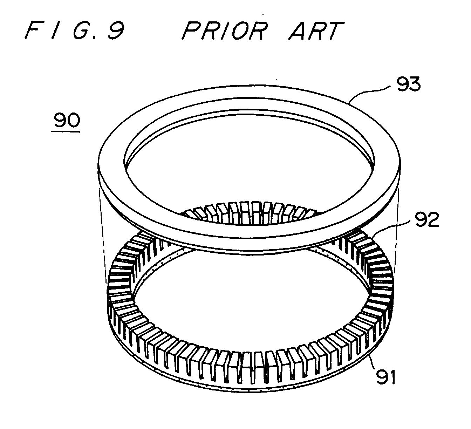

Fig. 9 shows an ultrasonic motor 90 of prior art. The ultrasonic motor 90 comprises a piezoelectric element 91 which makes shear vibration when it is impressed with an alternating voltage, a vibrator 92 which is excited by the piezoelectric element 91 to generate a traveling wave on its surface, and a rotor 93 which is in contact with the vibrator 92 and driven by the traveling wave of the vibrator 92.

The rotating speed of the ultrasonic motor 90 is inverse proportional to the torque and to the efficiency. Accordingly, the ultrasonic motor 90 is used in a low-speed rotation area where a high torque is obtained and is not used in a high-speed rotation area where only a low torque and a low efficiency are obtained.

### [Disclosure of the Invention]

It is an object of the present invention to provide an ultrasonic motor which has a high torque and a high efficiency in a high-speed rotation area and which has a simple structure.

In order to attain the object, an ultrasonic motor according to the present invention has a structure where a rotor is disposed between Langevin vibrators in contact therewith. When the Langevin vibrators are impressed with an alternating voltage, the Langevin vibrators make thickness vibration. Because the rotor is disposed between the Langevin vibrators and because the alternating voltage is impressed on the Langevin vibrators such that the polarities of the voltage on mutually facing Langevin vibrators are always opposite, the rotor makes traveling flexural vibration in harmony with the vibration of the Langevin vibrators.

Another ultrasonic motor according to the present invention has a structure where a rotor made of a magnetic metal is disposed between Langevin vibrators, each of which is provided with a magnet, out of contact therewith. When Langevin vibrators are impressed with an alternating voltage, the Langevin vibrators make thickness vibration. Accordingly, the spaces between the rotor and the magnets of the Langevin vibrators change periodically. When the magnets come closer to the rotor, the attraction between the rotor and the magnets becomes strong. When the magnets go away from the rotor, the attraction between the rotor and the magnets becomes weak. Thus, the attraction between the rotor and the magnets becomes strong and weak in harmony with the vibration of the Langevin vibrators, and further, the rotor makes traveling flexural vibration in harmony with the change of the attraction between the rotor and the magnets.

### [Brief Description of the Drawings]

This and other objects and features of the present invention will be apparent from the following description with reference to the accompanying drawings, in which:
Fig. 1 is a partially cutaway plan view of an ultrasonic motor which is a first embodiment of the present invention;
Fig. 2 is a sectional view of the ultrasonic motor shown in Fig. 1, taken along a line II-II;
Fig. 3 is a view of the ultrasonic motor shown in Fig. 1, explaining the principle of its rotation;
Fig. 4 is a plan view of an ultrasonic motor which is a second embodiment of the present invention;
Fig. 5 is a sectional view of the ultrasonic motor shown in Fig. 4, taken along a line V - V;
Fig. 6 is a view of the ultrasonic motor shown in Fig. 4, explaining the principle of its rotation;
Fig. 7 is an explanatory view of an ultrasonic motor which is another embodiment of the present invention;
Fig. 8 is an explanatory view of an ultrasonic motor which is another embodiment of the present invention; and
Fig. 9 is a perspective view of an ultrasonic motor of prior art.

### [Best Mode for Carrying out the Invention]

Exemplary ultrasonic motors according to the present invention are described with reference to the accompanying drawings.

### First Embodiment

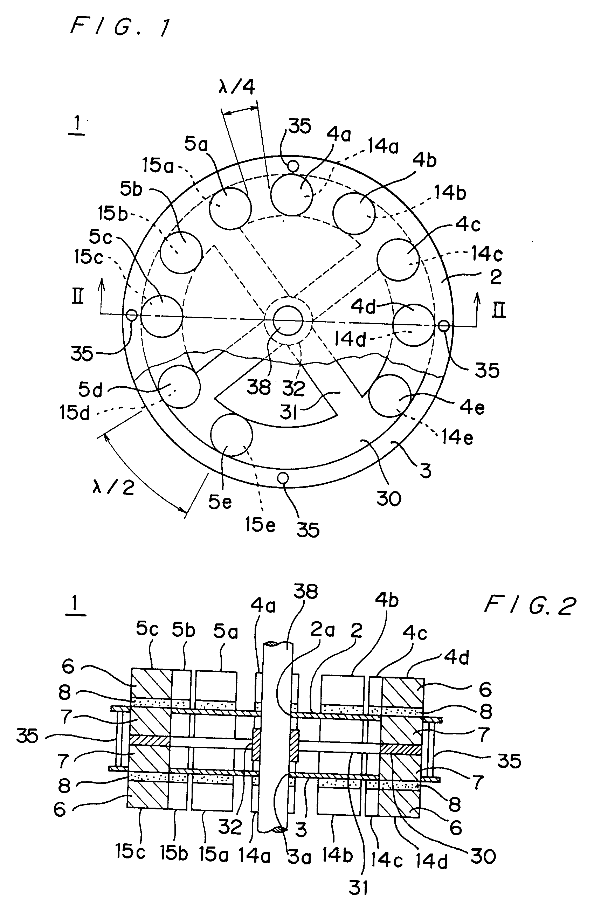

Figs. 1 and 2 show the structure of an ultrasonic motor 1 which is a first embodiment of the present invention. The ultrasonic motor 1 consists mainly of a pair of stators 2 and 3, a plurality of Langevin vibrators 4a through 4e, 5a through 5e, 14a through 14e and 15a through 15e, a rotor 30 and a shaft 38.

The stators 2 and 3 are disks and are connected with each other with a distance in-between by spacers 35 in the periphery. The Langevin vibrators 4a, 4b, 4c, 4d, 4e, 5a, 5b, 5c, 5d and 5e are provided on the stator 2 in a way to make a circle along the circumference. The vibrators 4a through 4e and 5a through 5e are arranged at a pitch of λ/2 (λ : resonance wavelength of the rotor 30), and the vibrators 4a and 5a are arranged at a gap of λ/4. Likewise, the Langevin vibrators 14a, 14b, 14c, 14d, 14e, 15a, 15b, 15c, 15d and 15e are provided on the stator 3 in a way to make a circle along the circumference. The vibrators 14a through 14e and 15a through 15e are arranged at a pitch of λ/2, and the vibrators 14a and 15a are arranged at a gap of λ/4. The vibrators 14a through 14e and 15a through 15e face the vibrators 4a through 4e and 5a through 5e respectively with the rotor 30 in-between. Center holes 2a and 3a are made in the stators 2 and 3 respectively, and the shaft 38 is inserted into the center holes 2a and 3a. Thus, the stators 2 and 3 also function as bearings.

The Langevin vibrators 4a through 15e are of a conventional type. Each of the vibrators 4a through 15e has a structure where metal plates 6 and 7 are provided on both sides of a piezoelectric ceramic plate 8, and the vibrators 4a through 15e make thickness vibration. The vibrators 4a through 15e are fixed on the stators 2 and 3 in the neighborhood of their nodes such that the piezoelectric ceramic plates 8 of the vibrators 4a through 5e have the same direction of polarization and that the piezoelectric ceramic plates 8 of the vibrators 14a through 15e have a direction of polarization opposite to that of the piezoelectric ceramic plates 8 of the vibrators 4a through 5e.

The rotor 30 is disposed between the stators 2 and 3 and nipped between the mutually facing vibrators 4a through 5e and 14a through 15e. The rotor 30 is made of a metal and is ring-shaped. The rotor 30 is connected with a hub 32 via a spoke 31 and fixed on the shaft 38 via the hub 32. The rotor 30, as will be described later, makes flexural vibration in accordance with the vibration of the vibrators 4a through 15e, and the resonance frequency of the flexural vibration depends on the thickness, the width and the radius of the rotor 30. If the resonance frequency of the vibrators 4a through 15e coincides with the resonance frequency or the higher harmonics of the rotor 30, the flexural vibration of the rotor 30 is made by the vibrators 4a through 15e efficiently.

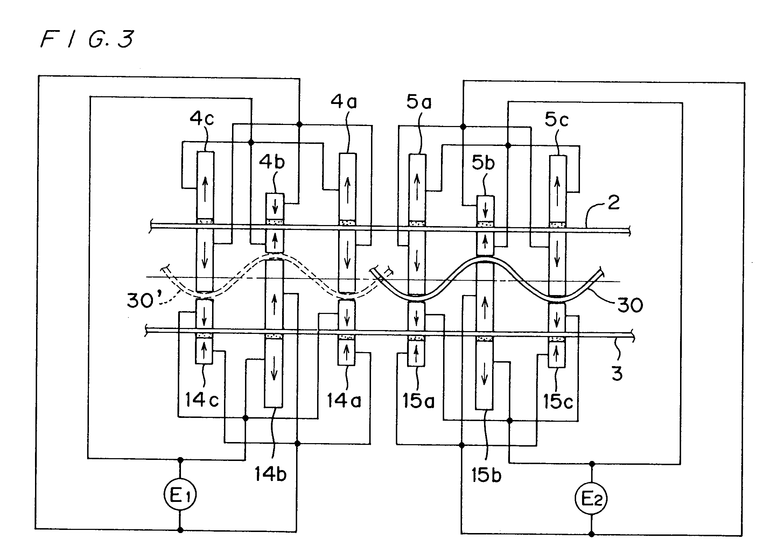

This ultrasonic motor 1 which has the above-described structure is impressed with two alternating voltages E₁ and E₂ which have a phase difference of 90 degrees from each other. More specifically, as shown in Fig. 3, the vibrators 4a through 4e and 14a through 14e are impressed with the alternating voltage E₁, and the vibrators 5a through 5e and 15a through 15e are impressed with the alternating voltage E₂. The electrical circuit for the alternating voltage E₁ is so made that the polarities of the voltage E₁ on two adjacent vibrators, for example, the vibrator 4a (or 14a) and the vibrator 4b (or 14b) are always opposite and that the polarities of the voltage E₁ on mutually facing vibrators, for example, the vibrators 4a and 14a are always the same. Likewise, the electrical circuit for the alternating voltage E₂ is so made that the polarities of the voltage E₂ on two adjacent vibrators, for example, the vibrator 5a (or 15a) and the vibrator 5b (or 15b) are always opposite and that the polarities of the voltage E₂ on mutually facing vibrators, for example, the vibrators 5a and 15a are always the same.

Since the polarities of the voltage E₁ or E₂ on two adjacent vibrators (for example, 5a and 5b) are always opposite, when one of the vibrators (for example, 5a) stretches, the other (for example, 5b) shrinks. Since the polarities of the voltage E₁ or E₂ on mutually facing vibrators (for example, 5a and 15a) are always the same, when one of the vibrators (for example, 5a) stretches, the other (for example, 15a) shrinks. As a result, mutually facing vibrators act for push-pull drive, and the flexural vibration of the rotor 30 is made more efficiently. In Fig. 3, a solid line 30 shows displacement of the rotor 30 by the alternating voltage E₂, and a dashed line 30' shows displacement of the rotor 30 by the alternating voltage E₁.

In this way, a traveling vibration wave is excited on the vibrators 4a through 15e efficiently. The traveling vibration wave and friction between the vibrators 4a through 15e and the rotor 30 rotate the rotor 30 around the shaft 38. When the impression of the alternating voltages E₁ and E₂ on the vibrators 4a through 15e is stopped, the rotation of the rotor 30 is stopped because of friction between the vibrators 4a through 15e and the rotor 30.

The ultrasonic motor 1 has a high efficiency in a high-speed rotation area compared with a conventional ultrasonic motor which makes shear vibration. Further, if the resonance frequency of the rotor 30 coincides with the resonance frequency of the Langevin vibrators 4a through 15e, the torque will be larger.

Obtained in this way is an ultrasonic motor of a simple structure which has a high torque and a high efficiency in a high-speed rotation area.

### Second Embodiment

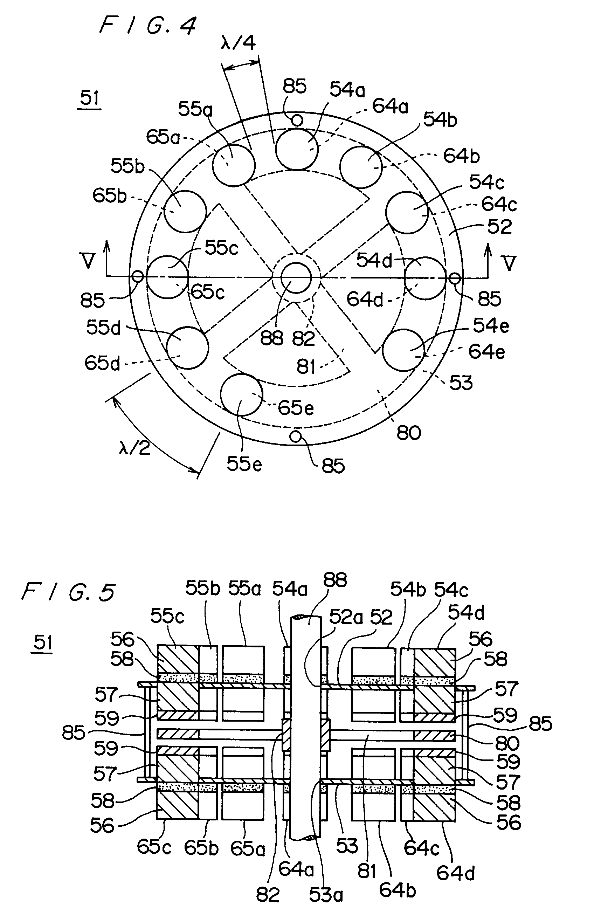

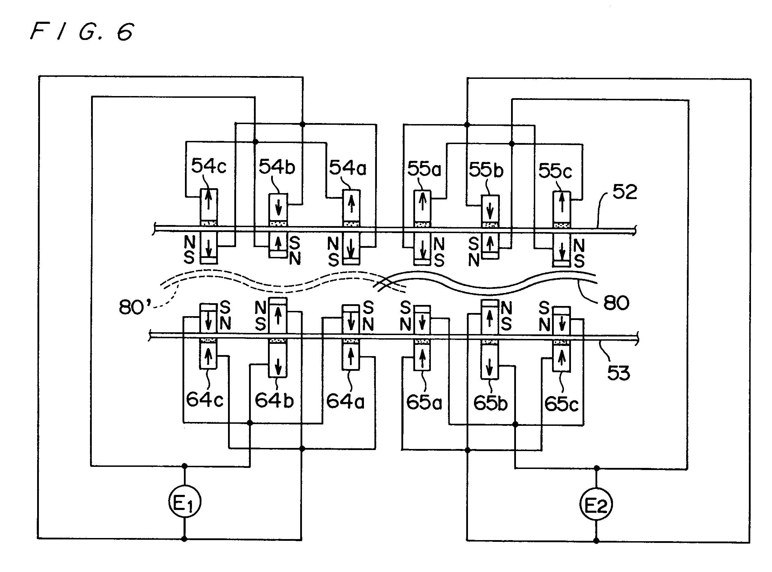

Figs. 4 and 5 show the structure of an ultrasonic motor 51 which is a second embodiment of the present invention. The ultrasonic motor 51 consists mainly of a pair of stators 52 and 53, a plurality of Langevin vibrators 54a through 54e, 55a through 55e, 64a through 64e and 65a through 65e each of which is provided with a magnet, a rotor 80 and a shaft 88.

The stators 52 and 53 are disks and are connected with each other with a distance in-between by spacers 85 in the periphery. The Langevin vibrators with a magnet 54a, 54b, 54c, 54d, 54e, 55a, 55b, 55c, 55d and 55e are provided on the stator 52 in a way to make a circle along the circumference. The vibrators 54a through 54e and 55a through 55e are arranged at a pitch of λ/2 (λ : resonance wavelength of the rotor 80), and the vibrators 54a and 55a are arranged at a gap of λ/4. Likewise, the Langevin vibrators with a magnet 64a, 64b, 64c, 64d, 64e, 65a, 65b, 65c, 65d and 65e are provided on the stator 53 in a way to make a circle along the circumference. The vibrators 64a through 64e and 65a through 65e are arranged at a pitch of λ/2, and the vibrators 54a and 55a are arranged at a gap of λ/4. The vibrators 64a through 64e and 65a through 65e face the vibrators 54a through 54e and 55a through 55e respectively with the rotor 80 in-between. Center holes 52a and 53a are made in the stators 52 and 53 respectively, and the shaft 88 is inserted into the center holes 52a and 53a. Thus, the stators 52 and 53 also function as bearings.

Each of the Langevin vibrators with a magnet 54a through 65e has a structure where metal plates 56 and 57 are provided on both sides of a piezoelectric ceramic plate 58 and further a magnet 59 is provided on the metal plate 57. The vibrators 54a through 65e make thickness vibration. The vibrators 54a through 65e are fixed on the stators 52 and 53 in the neighborhood of their nodes such that the piezoelectric ceramic plates 58 of the vibrators 54a through 55e have the same direction of polarization and that the piezoelectric ceramic plates 58 of the vibrators 64a through 65e have a direction of polarization opposite to that of the piezoelectric ceramic plates 58 of the vibrators 54a through 55e.

The rotor 80 is disposed between the stators 52 and 53 such that there are spaces between the rotor 80 and the vibrators 54a through 55e and between the rotor 80 and the vibrators 64a through 65e. The rotor 80 is made of a magnetic metal and is ring-shaped. The rotor 80 is connected with a hub 82 via a spoke 82 and fixed on the shaft 88 via the hub 82. The rotor 80, as will be described later, makes flexural vibration in accordance with the vibration of the vibrators 54a through 65e, and the resonance frequency of the flexural vibration depends on the thickness, the width and the radius of the rotor 80. Further, if the resonance frequency of the vibrators 54a through 65e coincides with the resonance frequency or higher harmonics of the rotor 80, the flexural vibration of the rotor 80 is made by the vibrators 54a through 65e efficiently.

The ultrasonic motor 51 which has the above-described structure is impressed with two alternating voltages E₁ and E₂ which have a phase difference of 90 degrees from each other. More specifically, as shown in Fig. 6, the vibrators 54a through 54e and 64a through 64e are impressed with the alternating voltage E₁, and the vibrators 55a through 55e and 65a through 65e are impressed with the alternating voltage E₂. The electrical circuit for the alternating voltage E₁ is so made that the polarities of the voltage E₁ on two adjacent vibrators, for example, the vibrator 54a (or 64a) and the vibrator 54b (or 64b) are always opposite and that the polarities of the voltage E₁ on mutually facing vibrators, for example, the vibrators 54a and 64a are always the same. Likewise, the electrical circuit for the alternating voltage E₂ is so made that the polarlties of the voltage E₂ on two adjacent vibrators, for example, the vibrator 55a (or 65a) and the vibrator 55b (or 65b) are always opposite and that the polarities of the voltage E₂ on mutually facing vibrators, for example, the vibrators 55a and 65a are always the same.

Since the polarities of the voltage E₁ or E₂ on adjacent vibrators (for example, 55a and 55b) are opposite, when one of the vibrators (for example, 55a) stretches, the other (for example, 55b) shrinks. Also, since the polarities of the voltage E₁ or E₂ on mutually facing vibrators (for example, 55a and 65a) are the same, when one of the vibrators (for example, 55a) stretches, the other (for example, 65a) shrinks. As a result, mutually facing vibrators act for push-pull drive, and the flexural vibration of the rotor 80 is made more efficiently.

When a vibrator stretches and comes closer to the rotor 80, the attraction between the rotor 80 and the magnet 59 of the vibrator becomes strong. When a vibrator shrinks and goes away from the rotor 80, the attraction between the rotor 80 and the magnet 59 of the vibrator becomes weak. As mentioned, when one of mutually facing vibrators comes closer to the rotor 80, the other goes away from the rotor 80. Accordingly, the corresponding portion of the rotor 80 bends toward the vibrator which comes closer. The vibrators 54a through 65e which are impressed with the alternating voltages E₁ and E₂ make stretching vibration, which changes the strength of the attraction between the rotor 80 and the magnet 59 of each of the vibrators 54a through 65e. Accordingly, the rotor 80 makes traveling flexural vibration. In this way, with no contact with the vibrators 54a through 65e, the rotor 80 can be driven to rotate around the shaft 88 by the magnetic power between the vibrators 54a through 65e and the rotor 80. In this method, there is no friction loss between the rotor 80 and the vibrators 54a through 65e, and this ultrasonic motor 51 has a high efficiency in a high-rotation speed area, compared with a conventional ultrasonic motor which makes shear vibration. In Fig. 6, a solid line 80 shows displacement of the rotor 80 by the alternating voltage E₂, and a dashed line 80' shows displacement of the rotor 80 by the alternating voltage E₁.

### Other Embodiments

Although the present invention has been described in connection with the preferred embodiments, it is to be noted that various changes and modifications will be possible to those who are skilled in the art. Such changes and modifications are to be understood as being within the scope of the invention.

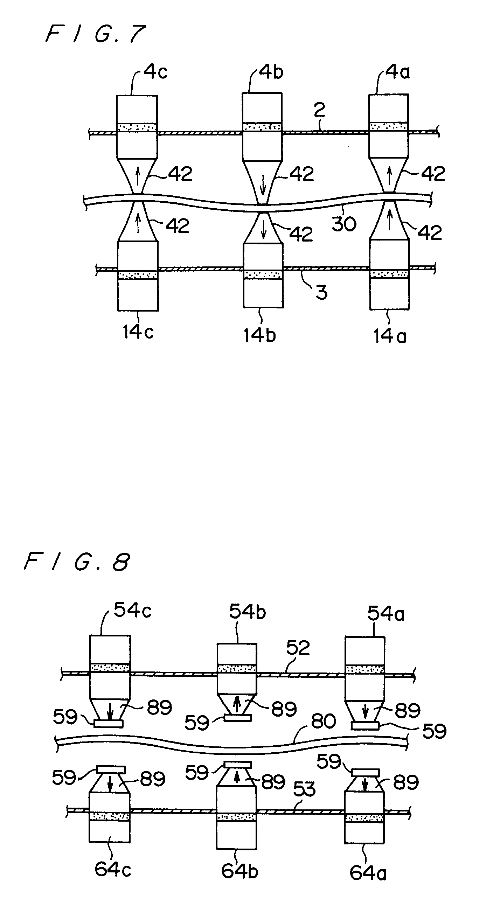

Fig. 7 shows a modification of the first embodiment. In the modification, each of the Langevin vibrators 4a through 15e is provided with a horn 42 at its edge. With the horn 42, the vibration energy of each vibrator converges. Thereby, the amplitude of the flexural vibration of the rotor 30 becomes larger, and the rotor 30 is driven to rotate more efficiently. Further, the rotor 30 may be provided with ring-shaped films made of a friction material with a high abrasion resistance or alternatively coated with the friction material on its upper and lower surfaces so as to prevent abrasion of the rotor 30.

Fig. 8 shows a modification of the second embodiment. In the modification, each of the Langevin vibrators 54a through 65e is provided with a horn 89 between its body and its magnet 59. With the horn 42, the vibration energy of each vibrator converges. Thereby, the amplitude of the flexural vibration of the rotor 80 becomes larger, and the rotor 80 is driven to rotate more efficiently.

## Claims

1. An ultrasonic motor comprising a rotor and a plurality of Langevin vibrators which vibrate when they are impressed with an alternating voltage, characterized in that:
the Langevin vibrators are provided on a pair of stators such that the Langevin vibrators make a circle on each of the stators and that the Langevin vibrators on one of the stators face the Langevin vibrators on the other stator respectively; and
the rotor is disposed between the stators, nipped between the Langevin vibrators which face each other and is driven by friction with the Langevin vibrators caused by vibration of the Langevin vibrators.

2. An ultrasonic motor as claimed in claim 1, characterized in that:
the Langevin vibrators and the rotor have a coincident resonance frequency.

3. An ultrasonic motor as claimed in claim 1, characterized in that:
each of the Langevin vibrators is provided with a horn at its edge.

4. An ultrasonic motor as claimed in claim 1, characterized in that:
a friction material with a high abrasion resistance is provided on both surfaces of the rotor.

5. An ultrasonic motor as claimed in claim 1, characterized in that:
each of the Langevin vibrators comprises a piezoelectric ceramic plate and metal plates provided on both major surfaces of the piezoelectric ceramic plate.

6. An ultrasonic motor as claimed in claim 1, characterized in that:
the Langevin vibrators are impressed with two alternating voltages which have a phase difference of 90 degrees from each other.

7. An ultrasonic motor as claimed in claim 5, characterized in that:
the piezoelectric ceramic plates of the Langevin vibrators provided on one of the stators have a same direction of polarization;
the piezoelectric ceramic plates of the Langevin vibrators provided on the other stator have a same direction of polarization; and
the direction of polarization of the piezoelectric ceramic plates of the Langevin vibrators provided on one of the stators and that of the piezoelectric ceramic plates of the Langevin vibrators provided on the other stator are opposite to each other.

8. An ultrasonic motor comprising a rotor and a plurality of Langevin vibrators which vibrate when they are impressed with an alternating voltage, characterized in that:
the Langevin vibrators, each of which is provided with a magnet on its edge, are provided on a pair of stators such that the Langevin vibrators make a circle on each of the stators and that the Langevin vibrators on one of the stators face the Langevin vibrators on the other stator respectively; and
the rotor, which is made of a magnetic metal, is disposed between the stators out of contact with the Langevin vibrators provided on the respective stators and is driven by magnetic power between the rotor and the magnets of the Langevin vibrators caused by vibration of the Langevin vibrators.

9. An ultrasonic motor as claimed in claim 8, characterized in that:
the Langevin vibrators and the rotor have a coincident resonance frequency.

10. An ultrasonic motor as claimed in claim 8, characterized in that:
each of the Langevin vibrators is provided with a horn between its body and its magnet.

11. An ultrasonic motor as claimed in claim 8, characterized in that:
each of the Langevin vibrators comprises a piezoelectric ceramic plate and metal plates provided on both major surfaces of the piezoelectric ceramic plate.

12. An ultrasonic motor as claimed in claim 8, characterized in that:
the langevin vibrators are impressed with two alternating voltages which have a phase difference of 90 degrees from each other.

13. An ultrasonic motor as claimed in claim 11, characterized in that:
the piezoelectric ceramic plates of the Langevin vibrators provided on one of the stators have a same direction of polarization;
the piezoelectric ceramic plates of the Langevin vibrators provided on the other stator have a same direction of polarization; and
the direction of polarization of the piezoelectric ceramic plates of the Langevin vibrators provided on one of the stators and that of the piezoelectric ceramic plates of the Langevin vibrators provided on the other stator are opposite to each other.
